# EUROPEAN PATENT APPLICATION

(11) **EP 1 469 633 A1**
(43) Date of publication of application: **20.10.2004**
(21) Application number: 03290970.7
(22) Date of filing: 18.04.2003
(51) Int. Cl.: H04L 12/14, H04L 29/06, H04L 12/56

(54) **Method, devices, and computer program for negotiating QoS and cost of a network connection during setup**

(71) Applicant: ALCATEL, 75008 Paris (FR)
(72) Inventor: Trappeniers, Lieven, 2200 Noorderwijk (BE); Godon, Marc, 1840 Londerzeel (BE); Handekyn, Koen, 9000 Gent (BE); Daenen, Koen, 3150 Haacht (BE); Chantrain, Dominique, 2650 Edegem (BE); Vanderstraeten, Hans, 9280 Lebbeke (BE)
(74) Representative: Brose, Gerhard, Dipl.-Ing.

(57) **Abstract**

The invention relates to a method for controlling establishing a network connection between a client (C) and a network comprising the phases of authenticating, authorizing, and accounting, comprising a further interim negotiation phase of negotiating (3, 4, 5) a connection or business mode of authorization and accounting.

The invention further relates to a network access system (C, S), network access client device (C), network access trading device (S), and a computer software product.

## Description

The present invention relates to a method for establishing a network connection between a client and a network. Furthermore, the present invention relates to a network access system, a network access client device, a network access trading device, and a computer software product.

Authentication, authorization, and accounting (AAA) represent the "big three" in terms of network management and policy administration. Such a method for use network resource access, in general, is described in the PCT Application WO 02/091648.

Authentication is to identify a client that requires access to some system and logically precedes authorization. The mechanism for authentication is typically undertaken through the exchange of logical keys or certificates between a client and a server. Authorization follows authentication and entails the process of determining whether the client is allowed to perform or request certain tasks or operations. Accounting is the process of measuring resource consumption, allowing monitoring and reporting of events and usage for various purposes including billing, analysis, and ongoing policy management.

AAA servers provide the means of administering policy to ensure proper use and management of resources. Historically, the remote Authentication Dial In User Service (RADIUS) protocol has been used to provide AAA services for dial-up point-to-point protocol and terminal server access. The next generation Authentication, Authorization and usage Accounting for dial-in access is Diameter; such as support virtual private network, smart authentication, and roaming concerns. The basic concept behind Diameter is to provide a protocol that can be extended in order to provide AAA services to new access technologies.

The Diameter protocol allows peers to exchange a variety of messages. The base protocol provides, e.g. the delivery of attribute value pairs, negotiation capabilities, in the sense of address negotiation, and error notification, as well as extensibility. Basic services necessary for applications, such as handling of user sessions or accounting are realized. Diameter has the following features:
- Transporting of user authentication information, for the purposes of enabling the Diameter server to authenticate the user.
- Transporting of service specific authorization information, between client and servers, allowing the peers to decide whether a user's access request should be granted.
- Exchanging resource usage information, which may be used for accounting purposes, capacity planning, etc.
- Relaying, proxying and redirecting of messages through a server hierarchy. Any node can initiate a request.

A Diameter client is a device at the edge of the network that performs access control for a network access client (device). A typical Diameter client is a network access server device (NAS) or a foreign agent (FA). A Diameter client generates Diameter messages to request authentication, authorization, and accounting services for a user of a network access client device. An agent is a node that does not authenticate or authorize messages locally. Examples of agents are proxies and relay agents.

Accounting is the act of collecting information on resource usage for the purpose of capacity planning, auditing, billing or cost allocation. Accounting servers creating the session record may do so by processing interim accounting events or accounting events from several devices serving the same user. Authentication is the act of verifying the identity of an entity (subject). Authorization is the act of determining whether a requesting entity (subject) will be allowed access to a resource (object). An agent is a node that provides either relay, proxy, redirect or translation services.

A network access server device is a node at the edge of the network that performs access control. It is assumed that it handles authentication, authorization, and accounting requests using e.g. an AAA server such as Diameter etc. for a particular realm.

A home realm is the administrative domain with which the user maintains an account relationship. A local realm is the administrative domain providing services to a user. A relay agent or relay forwards requests and responses.

A session is a related progression of events devoted to a particular activity. Each application should provide guidelines as to when a session begins and ends. A sub-session represents a distinct service, e.g. quality of service or data characteristics, provided to a given session.

Known is e.g. a network access mechanism that allow to impose business rules on authentication and authorization requests. The authorization request can then be granted or denied, based on known variables like username and password, quota, connection time, concurrent connections, etc. These solutions allow to give a well funded (but simple) accept/reject answer to a connection-request, possibly including information on the nature, e.g. for example quality of service, of the allowed connection.

Todays' access networking provide only means like virtual private networks, connection aggregation, connectivity to multiple networks, and static business rules on connectivity, i.e. a fixed authorization and accounting. The problem is to support dynamic AAA scenarios.

This problem is solved by a method for controlling establishing a network connection between a client and a network comprising the phases of authenticating, authorizing, and accounting, comprising a further interim negotiation phase of negotiating a connection or business mode of authorization and accounting. The method might comprising further an additional initialization phase synchronizing the underlying business model, and might provide a user interface means for involving a user in the further interim negotiation phase. The negotiating might comprising a connection policy-framework compliant solution.

The problem is further solved by a network access system comprising a network access client device connected to at least one network via a network access sever device, said network access client device comprising a connection controller for controlling the access to said at least one network, further comprising a business logic inference machine and memory for business logic specifying business rules and connection behavior, said connection controller uses the business logic for negotiating a connection or business mode with a network access trading device of said at least one network, and said network access trading device comprising a second connection controller for controlling the access to said at least one network from said at least one network access client device, and a second business logic inference machine and memory for business logic specifying business rules and connection behavior, said connection controller uses the business logic for negotiating a connection or business mode with said at least one network access client device and for authorization and accounting said connection.

And the problem is solved by a network access client device connected to at least one network comprising a connection controller for controlling the access to said at least one network, further comprising a business logic inference machine and memory for business logic specifying business rules and connection behavior, said connection controller uses the business logic for negotiating a connection or business mode with a network access trading device of said at least one network.

In advance the problem is solved by a network access trading device connected to at least one network and at least one network access client device, the network access trading device comprising a connection controller for controlling the access to said at least one network from said at least one network access client device, further comprising a business logic inference machine and memory for business logic specifying business rules and connection behavior, said connection controller uses the business logic for negotiating a connection or business mode with said at least one network access client device and for authorization and accounting said connection.

And the problem is solved by a corresponding computer software product comprising programming means for performing the method above.

In other words that is to go beyond simple accept/reject authentication-authorization-and-accounting scenarios, where the decision is based on information that is available or generated at the server side. The solution is that connection request are granularly finer accepted or rejected based on information available at the client side and at the server side and integrated in a business model.

The present invention introduces a mechanism for a business logic that is on top of the AAA functionality offering more advanced and nuanced access scenarios. An intermediate phase in authorization and connection setup, between request and acceptance is added. In this intermediate phase, the client application or the end-user are queried for more information or decisions on certain aspects of the connection.

A preferable implementation of the invention involves an architecture with a user's client device or a mediating client device and a network access server system. There might be a communication channel between an access controller in the access provider domain and the client device (connectivity through an (always-on) control channel). This life-line control channel is used to allow flexible business logic to be enforced when a user requests to be connected to a network. The client contains a connection controller that receives/intercepts connection requests, sends them to business logic (either on the terminal or on the server) and forwards the request to a connection controller. A server contains the business logic or a business logic controller that updates the business logic on the client (in case it is located on the client).

Accordingly, it is an object and advantage of the present invention to provide interactive integrative accept/reject/modify access scenarios with for instance a possibility to ask for additional information, e.g. from user or an application about access network characteristics, and possibility for users to decide on aspects of the connection possibility to have a negotiation between access client and access server.

Another advantage of the present invention is the de-coupling of authentication and business rules, allowing flexible business rules at client-side and server-side business logic, even when located at the client-side.

A further advantage of the present invention is to deploy client software without hard coded business logic. This will increase revenue by reducing the cost for deploying new or changing existing business logic.

Yet another advantage of the present invention allows to apply and negotiate business rules before connecting to the network and extensive and configurable set of rules for business logic.

These and many other objects and advantages of the present invention will become apparent to those of ordinary skill in the art from a consideration of the drawings and ensuing description.

An intermediate phase is foreseen in authorization and connection setup, between request and acceptance. In this intermediate phase, the client application or the end-user are queried for more information or decisions on certain aspects of the connection. The invention is illustrated in advance by the following figures, where
**Figure 1** is a flow diagram of authentication, authorization, and accounting phases according to prior art.
**Figure 2** is a is a flow diagram of authentication, authorization, and accounting phases in the method according to the invention.
**Figure 3 and Figure 4** are a collaboration diagrams of a network access systems according to the invention.
**Figure 5 and Figure 6** showing network access systems according to the invention.

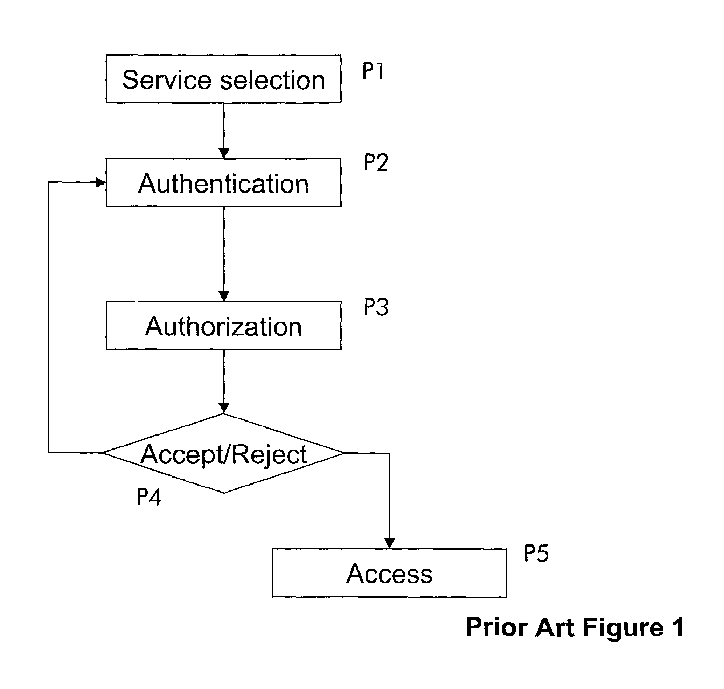

Figure 1 shows a flow diagram comprising the phases of service selection P1, authentication P2, authorization P3, a decision phase P4 whether to accept or reject, and an access phase P5. This is a part of the well known AAA procedure. A network access client selects a service within the service selection phase P1. After the selection the network access client is authenticated in the authentication phase P2. The authorization is checked within the authorization phase P3. Then a decision is performed within the decision phase P4 whether to accept the request and allow access in the access phase P5 or to resume the process, for instance, at the authentication phase P2.

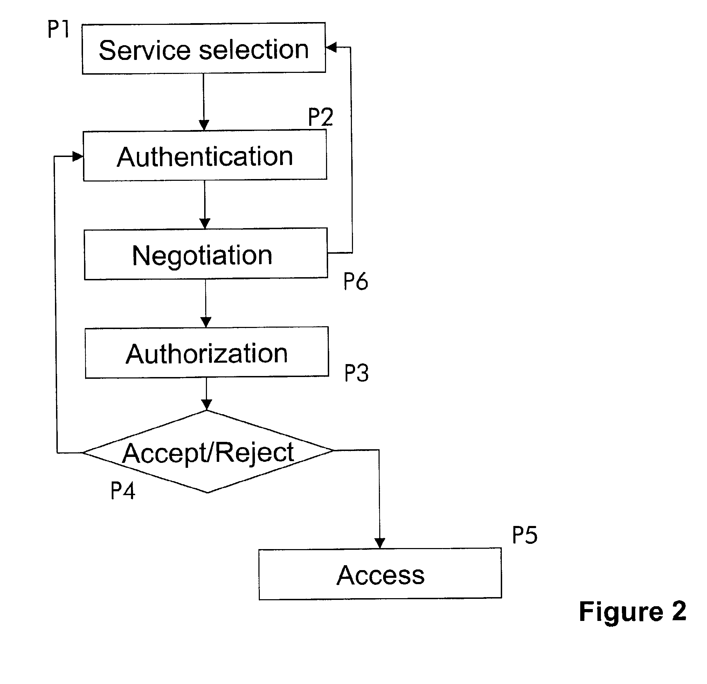

This procedure is enhanced illustratively shown in figure 2, showing a flow diagram with the phases described in figure 1 and an additional negotiation phase P6. Within the service selection phase P1 a network access client request some service, e.g. a network connection etc. After that the access client authenticates within the authentication phase P2. Within the additional negotiation phase P6 the network access client and a network access server negotiates about conditions or more precisely a model of prizing, capacity, efficiency etc. The authorization phase P3 and the decision phase P4 as well as the access phase follow the negotiation phase P6. These three phases are performed with respect to the negotiations done in the negotiation phase P6; meaning all the phases depend on the negotiation results that are e.g. manifested within the business mode, and the business mode is derived from the business model is an entity controlling the behavior within these phases. If the negotiation fails, the network access client might re-select a service. This is illustrated by the arrow from the negotiation phase P6 to the service selection phase P1. Although for simplicity reasons the phases are illustrated in a sequential order, the phases might overlap. For instance there might be while accessing a re-authentication necessary for re-negotiation due to the change of service characteristics.

The interim negotiation phase P6 and its result is the basis for a bunch of network service access scenarios. Possible use-cases involve a parental control where a parent is asked permission (grant/deny) when his child wants to access the internet, or a parent can accept child's connection, but bandwidth is specified by parent at that time. The parent is notified when child goes online etc.

Especially more specific request or user alert of specific conditions are enabled by the advanced interim negotiation phase. The access server might ask for precise bandwidth the user wants or the variance conditions he agrees. The access system might notify a user or a client of low network performance or of network outage using a suited man machine interface.

The result of this enhanced connectivity request scenario is that after the intermediate phase the connection is granted, denied or granted in a modified conditioned form. A concrete connection setup might be allocated around the negotiation phase or at the end when access is granted.

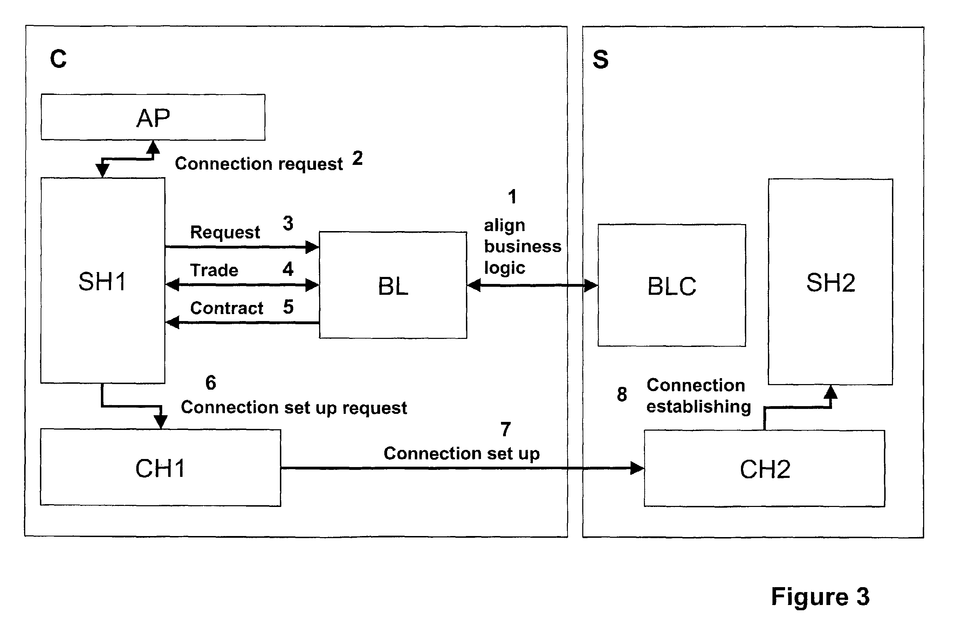

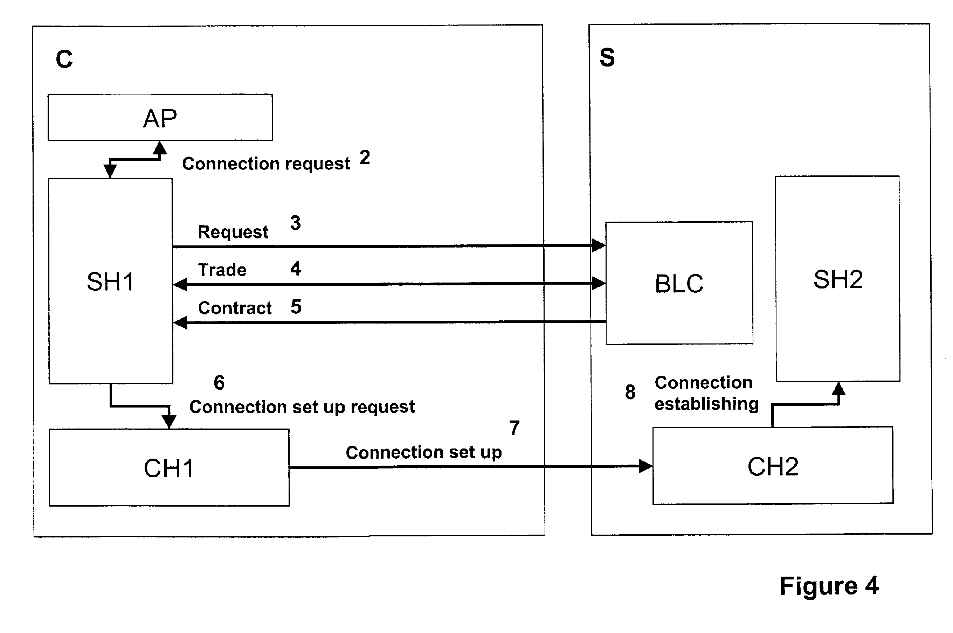

The shown collaboration diagrams in figure 3 and figure 4 comprising a client object C and a server object S.

In figure 3 the client object C comprises an application AP, a first session handler SH1, a business logic BL, and a first connection handler CH1. The server object S comprises a second session handler SH2 and a second connection handler CH2, as well as a business logic controller BLC.

The objects interacts as follows: The client object and the server object align or synchronize their business logic in order to enable a negotiation in a first interaction 1. When the application requires a certain network resource, a second interaction 2 a connection request is sent to the first session handler SH1. The session handler request in a third interaction 3 said resource, and trades collaboratively 4 about quality of service, information, prizing, restrictions, etc. using the business logic BL. Finally a contract is established 5. Then the first session handler raises a connection set up request 6 to the first connection handler CH1. The first connection handler CH1 sets up a connection 7 via informing at the server side the second connection setup handler CH2. At the server side the second session handler is informed about the connection setup 8.

Both session handlers SH1 and SH2 within this illustrative architecture are responsible to enforce the negotiated contract. Such contracts might comprise information policies or pricing as well as service characteristics like maximal or guaranteed bandwidth as well as dynamic aspects like accounting or additional claims on e.g. quality of service.

The business logic BL might be realized by a set of business objects. A business object is an object that models a business concept, such as a person, place, event, or process. Such business objects represent real world things such as accounts, services, persons, products, tariffs, invoices, or payments. Modern software products comprising information systems that serve and adapt to their complex needs. Applications like an authentication or an authorization designed from the ground up (and not hacked) using the business object model are better suited to meet the requirements of rapidly evolving businesses.

In figure 4 an alternative deployment of the business logic is shown. There the client object C does not comprise the business model. Instead for requesting, trading and contracting it has to contact the server's business logic controller BLC. The remaining interactions are the same as in figure 3.

When an application AP requires network services, i.e. intends to establish a connection, a request is forwarded to or intercepted by a connection controller comprising e.g. the first session handler SH1. This first session handler SH1 consults a business logic module BL or BLC, located on the user terminal or on the server in the network, that enable to decide grant/deny the connection or to initiate an intermediate phase querying the user or his application for more info or a decision on some aspect(s) of the connection. After the preliminary connection accept, the request is send to e.g. an actual connection provider module, for example a PPP or DHCP driver.

In case the business logic module BLC is located on the server S, only, the connection set-up request is sent over the control channel (including the necessary data concerning originator, addressee, network to be connected to, timestamp, etc.). In case the business logic module BC is located in the client C, a consultation of this local functionality is kept up-to-date e.g. by the server.

Preferably the consultation of the business rules take place before the connection set-up; And preferably the verification of the username/password pairs (authentication) is often still done at the phase of connection set-up and is not necessarily included in the negotiation phase, i.e. required by business rules in the business logic BL, BLC (although it certainly can be included).

The consultation and enforcement of flexible business rules can among others be based on the following criteria: decision of requestor or third party on aspect of connection (QoS, security,...), information specified by user or application during intermediate phase, alert of user and resulting user action, about the user's online credit, parental control, number of other users, high load or outage of destination network disclaimer or legal warning of network (for example banking network), etc.

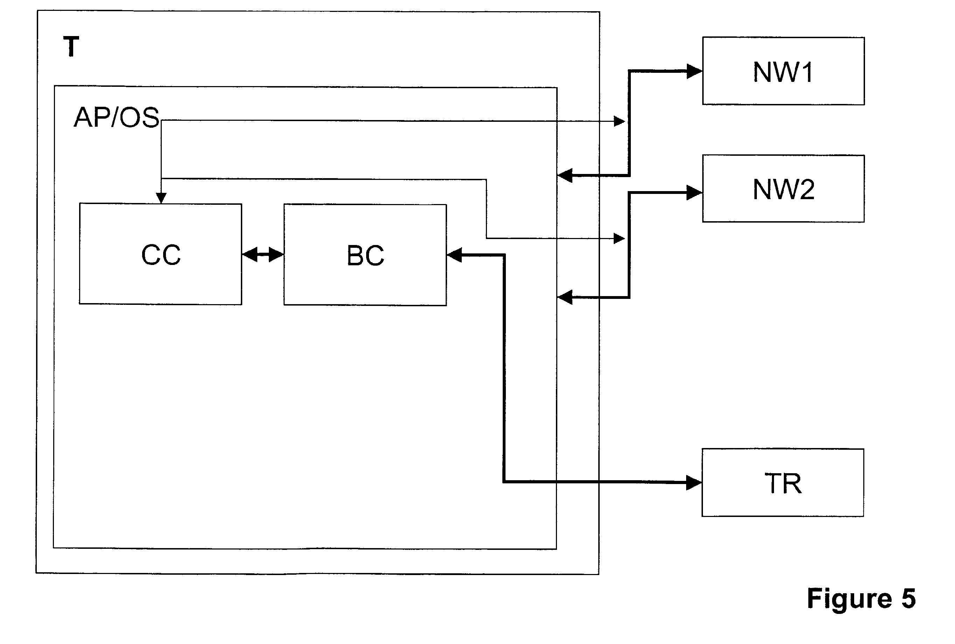

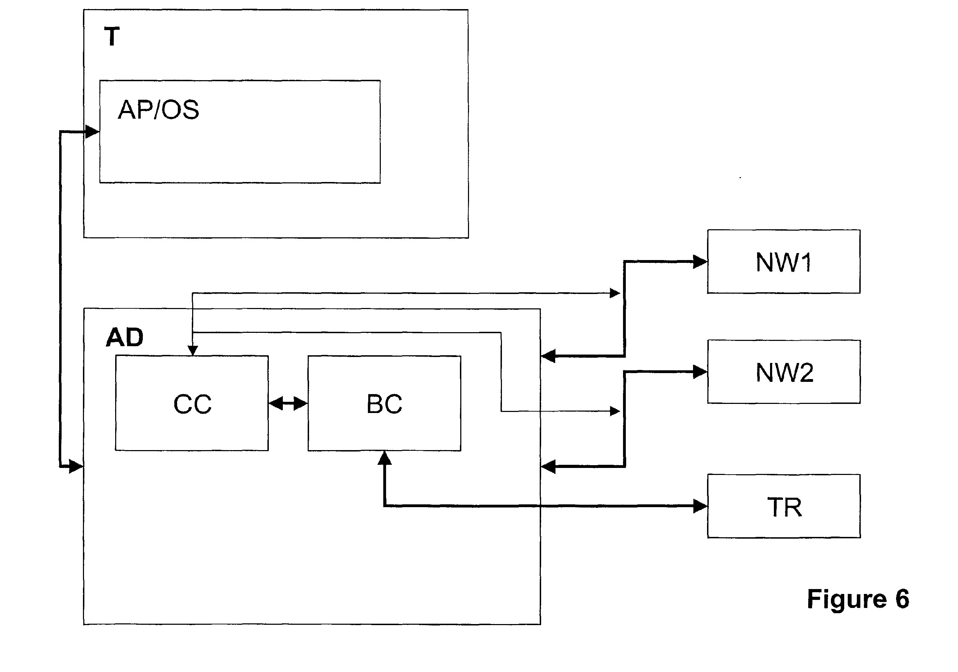

A possible implementation of the invention involves a concrete devices and networks in the home realm and the local realm, as shown in figure 5 and figure 6.

Figure 5 shows a terminal T comprising an application or an operating system AP/OS and a business logic controller BC. The server side, i.e. the local realm, comprises a trader TR and multiple networks NW1, NW 2. This trader can be a network access client device, say, which might be an foreign agent, a relay agent, a proxy, a AAA server or the like.

There exists a communication channel between the connection controller CC via the business controller BC in the home realm and the trader TR in the local realm, that is used to allow flexible business logic to be enforced when a user requests to be connected to a network.

A network access client might be, either an separate access device AD, shown in figure 6, or a terminal T, shown in figure 5 comprises a connection controller CC that receives/intercepts all connection requests, sends them to a business logic (either on the terminal T or at the trader TR) realized by the business controller BC . The trader TR contains the business logic or a corresponding business logic controller that updates the business logic on the client, in case it is located on the client.

A real example scenario might look like this. Using e.g. the Alcatel 5742 Personalized Service Selection client, John Smith wants to connect to a banking virtual private network. He is presented a dialog box warning him of new legal conditions of online banking. Only after reading this message (and pressing accept), the actual connection is set up.

An alternative real example scenario might be using his Alcatel 5742 Personalized Service Selection client, the son of John Smith wants to access the internet. The business logic, that is consulted by the client application before trying to connect, alerts John Smith and ask his approval. Mr. Smith decides to allow this connection but only at 512 Kbps. When later on his son wants to access the school's virtual private network, of course a 1 Mbps connection is approved by the caring father.

The business logic controlling the intermediate phase can be located on the user terminal, an advanced modem or a server in the network. When it is located at the customer premises, an update mechanism has to be in place. The connection controller can be on the user terminal or on an advanced modem. When on the terminal, the connection controller can be part of an application or a standalone service, a daemon, or an application running in the background.

The invention has several aspects, namely an intermediate phase between authentication and authorization, an intermediate phase between connection request and connection accept/reject. An intermediate negotiation can be initiated between business logic and the user or his application. Another aspect is the use of flexible business rules that can be on a server, the client terminal (with an update mechanism from the server) or the modem (with an update mechanism from the server) and a (possibly permanent) communication channel between user/terminal and access controller as an enabler for enforcing flexible, server-side controlled, business logic. This (possibly permanent) communication channel between user/terminal and access controller is an enabler for a policy-framework compliant solution for connection setup and co-existence.

## Claims

1. A method for controlling establishing a network connection between a client and a network comprising the phases of authenticating (P2), authorizing (P3), and accounting (P4), **characterized by** comprising a further interim negotiation phase (P6) of negotiating a connection or business mode of authorization and accounting.

2. The method according to claim 1, **characterized by** comprising further an additional initialization phase synchronizing the underlying business model (BL, BLC).

3. The method according to claim 1, **characterized by** providing a user interface means for involving a user in the further interim negotiation phase (P6).

4. The method according to claim 1, **characterized in that** negotiating comprising connection policy-framework compliant solution.

5. A network access system comprising a network access client device (T, AD) connected to at least one network (NW1, NW2, NW3) via a network access trader device (TR), said network access client device comprising a connection controller (CC) for controlling the access to said at least one network (NW1, NW2, NW3), **characterized by** further comprising a business logic inference machine and memory (BC) for business logic (BL, BLC) specifying business rules and connection behavior, said connection controller (CC) uses the business logic (BL, BLC) for negotiating a connection or business mode with a network access trading device of said at least one network (NW1, NW2, NW3), and said network access trading device (TR) comprising a second connection controller for controlling the access to said at least one network from said at least one network access client device (T, AD), and a second business logic inference machine and memory for business logic specifying business rules and connection behavior, said connection controller uses the business logic for negotiating a connection or business mode with said at least one network access client device and for authorization and accounting said connection.

6. A network access client device (T, AD) connected to at least one network (NW1, NW2, NW3) comprising a connection controller (CC) for controlling the access to said at least one network (NW1, NW2, NW3), **characterized by** further comprising a business logic inference machine and memory (BC) for business logic specifying business rules and connection behavior, said connection controller (CC) uses the business logic (BL, BLC) for negotiating a connection or business mode with a network access trading device (TR) of said at least one network.

7. A network access trading device (TR) connected to at least one network access client device (T, AD), the network access trading device (TR) comprising a connection controller for controlling the access to said at least one network from said at least one network access client device, **characterized by** further comprising a business logic inference machine and memory for business logic specifying business rules and connection behavior, said connection controller uses the business logic for negotiating a connection or business mode with said at least one network access client device and for authorization and accounting said connection.

8. A network access trading device (TR) according to claim 7, **characterized in that** the network access trading device (TR) is a network access server.

9. A computer software product, **characterized by** comprising programming means for performing the method according to claim 1.
